# EUROPÄISCHE PATENTSCHRIFT

(11) **EP 1 010 707 B1**
(45) Veröffentlichungstag und Bekanntmachung des Hinweises auf die Patenterteilung: **16.06.2004**
(21) Anmeldenummer: 99122893.3
(22) Anmeldetag: 18.11.1999
(51) Int. Cl.: C08F 2/22

(54) **Verfahren zur Herstellung wässriger Polymerdispersionen**
Process for preparing aqueous polymer dispersions
Procédé de préparation de dispersions aqueuses de polymères

(30) Priorität: 15.12.1998 DE 19857897
(43) Veröffentlichungstag der Anmeldung: 21.06.2000
(73) Patentinhaber: BASF AKTIENGESELLSCHAFT, 67056 Ludwigshafen (DE)
(72) Erfinder: Angel, Maximilian, Dr., 67105 Schifferstadt (DE); Kolter, Karl, Dr., 67117 Limburgerhof (DE); Sanner, Axel, Dr., 67227 Frankenthal (DE)

(56) Entgegenhaltungen:
- EP-A- 0 450 437
- DE-A- 19 642 762
- FR-A- 2 180 748

## Beschreibung

Die Erfindung betrifft ein Verfahren zur Herstellung wäßriger Polymerdispersionen sowie deren Verwendung als Hilfsstoff für pharmazeutische Darreichungsformen.

Eine Vielzahl von Veröffentlichungen befaßt sich mit der Untersuchung von Verfahren zur Herstellung wäßriger Polymerdispersionen, u.a. H. Fikentscher et al., Angew. Chem. 72 (1960) 856; A. Alexander, Prog. Polym. Sci. 3 (1971) 145; G. Markert, Angew. Makromol. Chem. 123/124 (1984) 285; Houben-Weyl, 4th ed., E20/2, 1150; EP-A-0 450 437 und EP-A-0 627 450.

Je nach Anwendungsgebiet werden solche Polymerdispersionen häufig in neutralisierter oder teilneutralisierter Form eingesetzt. Die Neutralisation der Dispersion kann dabei sowohl während als auch nach der Polymerisation erfolgen.

Dabei ist häufig zu beobachten, daß die Lagerstabilität, insbesondere die pH-Wert-Stabilität von neutralisierten, wäßrigen Polymerdispersionen nicht immer zufriedenstellend ist. So kann es im Verlauf der Lagerung zu unerwünschten pH-Wert-Absenkungen kommen, wodurch sich die Eigenschaften derartiger Dispersionen drastisch verschlechtern können.

Wie darüber hinaus aus der Literatur bekannt ist [Friedrich Hölscher, Dispersionen synthetischer Hochpolymerer, Teil I (Springer Verlag Berlin, 1969), Seite 77], spielt der pH-Wert des Reaktionssystems bei der Polymerisation in Bezug auf die Polymerisationsgeschwindigkeit, den Restmonomergehalt nach der Polymerisation sowie auf die kolloidale Stabilität des Systems eine wichtige Rolle. So kann es beispielsweise bei der pH-Wert-Regelung durch Puffer zur Bildung von beträchtlichen Mengen an Elektrolyten kommen, die zu einer unerwünschten Koagulation des Systems führen können.

Der vorliegenden Erfindung lag die Aufgabe zugrunde, ein Verfahren zur Herstellung von lagerstabilen, wäßrigen Polymerdispersionen mit niedrigem Monomergehalt bereitzustellen, das die oben genannten Nachteile nicht aufweist.

Die Aufgabe wurde erfindungsgemäß gelöst durch ein Verfahren zur Herstellung einer wäßrigen Polymerdispersion durch Polymerisation von mindestens einem radikalisch polymerisierbaren, ethylenisch ungesättigten Monomeren aus der Gruppe, bestehend aus C₁-C₂₄-Alkylester von monoethylenisch ungesättigten C₃-C₈-Carbonsäuren, C₁-C₂₄-Alkylester von monoethylenisch ungesättigten C₄-C₈-Dicarbonsäuren, Vinylester von aliphatischen C₁-C₂₄-Carbonsäuren, Amide von monoethylenisch ungesättigten C₃-C₈-Carbonsäuren, C₁-C₂₄-Alkyl-Vinylether, N-C₁-C₂₄-Alkyl-substituierter Amide von monoethylenisch ungesättigten C₃-C₈-Carbonsäuren, N,N-C₁-C₂₄-Dialkyl-substituierter Amide von monoethylenisch ungesättigten C₃-C₈-Carbonsäuren, N-Vinyllactame, N-Vinylamine, Styrol und Butadien in einem wäßrigen System in Gegenwart eines Polymerisationsinitiators, dadurch gekennzeichnet, daß der pH-Wert der wäßrigen Dispersion während des Herstellprozesses durch Zugabe von mindestens zwei unterschiedlichen, basisch wirkenden Reagenzien eingestellt wird, wobei mindestens eine der basisch wirkenden Reagenzien mehrstufig zugegeben wird, mindestens eine der basisch wirkenden Reagenzien eine schwache Säure ist, und wobei nach vollständiger Umsetzung der Monomeren die Dispersion auf einen pH-Wert von 6 bis 10 eingesellt wird.

Als Alkylester von monoethylenisch ungesättigten C₃-C₈-Carbonsäuren sowie von monoethylenisch ungesättigten C₄-C₈-Dicarbonsäuren seien verzweigte oder unverzweigte C₁-C₂₄-Alkylester, bevorzugt Methyl-, Ethyl-, n-Propyl-, 1-Methylethyl-, n-Butyl-, 1-Methylpropyl-, 2-Methylpropyl-, 1,1-Dimethylethyl-, n-Pentyl-, 1-Methylbutyl-, 2-Methylbutyl-, 3-Methylbutyl-, 2,2-Dimethylpropyl-, 1-Ethylpropyl-, n-Hexyl-, 1,1-Dimethylpropyl-, 1,2-Dimethylpropyl-, 1-Methylpentyl-, 2-Methylpentyl-, 3-Methylpentyl-, 4-Methylpentyl-, 1,1-Dimethylbutyl-, 1,2-Dimethylbutyl-, 1,3-Dimethylbutyl-, 2,2-Dimethylbutyl-, 2,3-Dimethylbutyl-, 3,3-Dimethylbutyl-, 1-Ethylbutyl-, 2-Ethylbutyl-, 1,1,2-Trimethylpropyl-, 1,2,2-Trimethylpropyl-, 1-Ethyl-1-methylpropyl-, 1-Ethyl-2-methylpropyl-, n-Heptyl-, 2-Ethylhexyl-, n-Octyl-, n-Nonyl-, n-Decyl-, n-Undecyl-, n-Dodecyl-, n-Tridecyl-, n-Tetradecyl-, n-Pentadecyl-, n-Hexadecyl-, n-Heptadecyl-, n-Octadecyl-, n-Nonadecyl-, n-Eicosyl-, n-Docosyl- oder n-Tetracosylester genannt.

Als bevorzugte Vertreter der oben genannten Alkylreste seien verzweigte oder unverzweigte C₁-C₁₂-, besonders bevorzugt C₁-C₆-Alkylreste genannt.

Unter dem Begriff monoethylenisch ungesättigte Carbonsäuren mit 3 bis 8 C-Atomen sind beispielsweise Acrylsäure, Methacrylsäure, Dimethacrylsäure, Ethacrylsäure, Allylessigsäure, Vinylessigsäure und Crotonsäure zu verstehen. Bevorzugte Vertreter dieser Gruppe sind Acrylsäure und Methacrylsäure.

Unter dem Begriff monoethylenisch ungesättigte Dicarbonsäuren mit 4 bis 8 C-Atomen sind beispielsweise Vertreter aus der Gruppe Maleinsäure, Fumarsäure, Mesaconsäure oder Itaconsäure, bevorzugt Maleinsäure zu verstehen.

Als Vinylester von aliphatischen C₁-C₂₄-Carbonsäuren sind Vinylester von aliphatischen verzweigten oder unverzweigten, gesättigten oder ungesättigten C₁-C₂₄-Carbonsäuren gemeint. Beispielsweise seien genannt Ameisensäure, Essigsäure, Propionsäure, Buttersäure, Valeriansäure, Isovaleriansäure, Capronsäure, Caprylsäure, Caprinsäure, Undecylensäure, Laurinsäure, Myristinsäure, Palmitinsäure, Palmitoleinsäure, Stearinsäure, Ölsäure, Arachinsäure, Behensäure sowie Lignocerinsäure.

Bevorzugt werden Vinylester der oben genannten C₁-C₁₂-Carbonsäuren, insbesondere der C₁-C₆-Carbonsäuren verwendet.

Als Amide von monoethylenisch ungesättigte Carbonsäuren mit 3 bis 8 C-Atomen sind beispielsweise Amide von Acrylsäure, Methacrylsäure, Dimethacrylsäure, Ethacrylsäure, Allylessigsäure, Vinylessigsäure und Crotonsäure zu verstehen. Bevorzugte Vertreter dieser Gruppe sind Acrylamid (H₂C=CH-CO-NH₂) und Methacrylamid (CH₂=C(CH₃)-CO-NH₂).

Ferner können C₁-C₂₄-Alkyl-Vinylether, bevorzugt C₁-C₁₂-Alkyl-Vinylether polymerisiert werden.

Als bevorzugte C₁-C₁₂-Alkylreste der Vinylether seien verzweigte oder unverzweigte Alkylketten wie z.B. Methyl-, Ethyl-, n-Propyl-, 1-Methylethyl-, n-Butyl-, 1-Methylpropyl-, 2-Methylpropyl-, 1,1-Dimethylethyl-, n-Pentyl-, 1-Methylbutyl-, 2-Methylbutyl-, 3-Methylbutyl-, 2,2-Dimethylpropyl-, 1-Ethylpropyl-, n-Hexyl-, 1,1-Dimethylpropyl-, 1,2-Dimethylpropyl-, 1-Methylpentyl-, 2-Methylpentyl-, 3-Methylpentyl-, 4-Methylpentyl-, 1,1-Dimethylbutyl-, 1,2-Dimethylbutyl-, 1,3-Dimethylbutyl-, 2,2-Dimethylbutyl-, 2,3-Dimethylbutyl-, 3,3-Dimethylbutyl-, 1-Ethylbutyl-, 2-Ethylbutyl-, 1,1,2-Trimethylpropyl-, 1,2,2-Trimethylpropyl-, 1-Ethyl-1-methylpropyl-, 1-Ethyl-2-methylpropyl-, n-Heptyl-, 2-Ethylhexyl-, n-Octyl-, 2-Ethylhexyl-, n-Nonyl-, n-Decyl-, n-Undecyl- sowie n-Dodecylreste genannt.

Als weitere Monomere können N-C₁-C₂₄-Alkyl- oder N,N-C₁-C₂₄-Dialkyl-substituierte Amide von monoethylenisch ungesättigten C₃-C₈-Carbonsäuren eingesetzt werden, wobei es sich bei den Alkylresten um verzweigte oder unverzweigte aliphatische Alkylreste mit 1 bis 24 Kohlenstoffatomen handelt, beispielsweise Methyl-, Ethyl-, n-Propyl-, 1-Methylethyl-, n-Butyl-, 1-Methylpropyl-, 2-Methylpropyl-, 1,1-Dimethylethyl-, n-Pentyl-, 1-Methylbutyl-, 2-Methylbutyl-, 3-Methylbutyl-, 2,2-Dimethylpropyl-, 1-Ethylpropyl-, n-Hexyl-, 1,1-Dimethylpropyl-, 1,2-Dimethylpropyl-, 1-Methylpentyl-, 2-Methylpentyl-, 3-Methylpentyl-, 4-Methylpentyl-, 1,1-Dimethylbutyl-, 1,2-Dimethylbutyl-, 1,3-Dimethylbutyl-, 2,2-Dimethylbutyl-, 2,3-Dimethylbutyl-, 3,3-Dimethylbutyl-, 1-Ethylbutyl-, 2-Ethylbutyl-, 1,1,2-Trimethylpropyl-, 1,2,2-Trimethylpropyl-, 1-Ethyl-1-methylpropyl-, 1-Ethyl-2-methylpropyl-, n-Heptyl-, 2-Ethylhexyl-, n-Octyl-, n-Nonyl-, n-Decyl-, n-Undecyl-, n-Dodecyl-, n-Tridecyl-, n-Tetradecyl-, n-Pentadecyl-, n-Hexadecyl-, n-Heptadecyl-, n-Octadecyl-, n-Nonadecyl-, n-Eicosyl-, n-Docosyl- oder n-Tetracosylreste, bevorzugt solche Alkylreste mit 1 bis 12, besonders bevorzugt mit 1 bis 6 Kohlenstoffatomen.

Die amidierten monoethylenisch ungesättigten Carbonsäuren mit 3 bis 8 C-Atomen können, wie bereits oben genannt, beispielsweise für Acrylsäure, Methacrylsäure, Dimethacrylsäure, Ethacrylsäure, Allylessigsäure, Vinylessigsäure und Crotonsäure stehen. Bevorzugte Vertreter dieser Gruppe sind Acrylsäure und Methacrylsäure.

Aus dieser Gruppe von Carbonsäuren werden ebenfalls bevorzugt Acrylsäure und/oder Methacrylsäure verwendet.

Bevorzugte amidierte Comonomere sind beispielsweise N-Methylacrylamid, N-Ethylacrylamid, N-n-Propylacrylamid, N-1-Methylethylacrylamid, N-n-Butylacrylamid, N-1-Methylpropylacrylamid, N-2-Methylpropylacrylamid, N-1,1-Dimethylethylacrylamid, N-n-Pentylacrylamid, N-n-Hexylacrylamid, N-Methylmethacrylamid, N-Ethylmethacrylamid, N-n-Propylmethacrylamid, N-1-Methylethylmethacrylamid, N-n-Butylmethacrylamid, N-1-Methylpropylmethacrylamid, N-2-Methylpropylmethacrylamid, N-1,1-Dimethylethylmethacrylamid, N-n-Pentylmethacrylamid, N-n-Hexylmethacrylamid.

Als N-Vinyllactame oder N-Vinylamine seien Verbindungen genannt, ausgewählt aus der Gruppe, bestehend aus N-Vinylpyrrolidon, N-Vinylpiperidon, N-Vinylcaprolactam, N-Vinylimidazol, methyliertes N-Vinylimidazol und N-Vinylformamid.

Zur Erhöhung der Wasserlöslichkeit der Polymerisate können als zusätzliche Monomere u.a. Acrylamidomethylpropansulfonsäure und deren Salze oder Vinylsulfonsäure und deren Salze verwendet werden.

Selbstverständlich können auch Mischungen der jeweiligen oben genannten Monomeren polymerisiert werden.

Die für das erfindungsgemäße Verfahren besonders bevorzugt eingesetzten Monomeren sind die bereits o.g. C₁-C₆-Alkylester von Acrylsäure und Methacrylsäure, insbesondere Acrylsäuremethylester, Acrylsäureethylester, Methacrylsäuremethylester und/oder Methacrylsäureethylester.

Ganz besonders bevorzugt sind Copolymere enthaltend 50 bis 75 Gew.-% der o.g. Acrylsäureester und 50 bis 25 Gew.-% der o.g. Methacrylsäureester.

Zur Herstellung der Polymerisate können die Monomeren in an sich bekannter Weise sowohl mit Hilfe von Radikale bildenden Initiatoren als auch durch Einwirkung energiereicher Strahlung, worunter auch die Einwirkung energiereicher Elektronen verstanden werden soll, polymerisiert werden.

Als Polymerisationsinitiatoren eignen sich u.a. organische Peroxide und Hydroperoxide, wie Diacetylperoxid, Dibenzoylperoxid, Succinylperoxid, Di-tert.-butylperoxid, tert.-Butylperbenzoat, tert.-Butylperpivalat, tert.-Butylpermaleinat, Cumolhydroperoxid, Diisopropylperoxidicarbamat, Bis-(o-toluoyl)-peroxid, Didecanoylperoxid, Dioctanoylperoxid, Dilauroylperoxid, tert.-Butylperisobutyrat, tert.-Butylperacetat, Di-tert.-Amylperoxid, tert.-Butylhydroperoxid; anorganische Perverbindungen wie Alkaliperoxodisulfate, Ammoniumperoxodisulfat oder H₂O₂; Redoxinitiatoren wie H₂O₂/Ascorbinsäure, H₂O₂/Fe²⁺, Peroxodisulfate/Thiosulfate, Peroxide/Thiosulfate; Azostarter wie 4,4'-Azobisisobutyronitril sowie Mischungen der genannten Initiatoren.

Bevorzugte Vertreter der o.g. Polymerisationsinitiatoren sind Ammoniumperoxodisulfat, die sauer wirkenden Alkaliperoxodisulfate, insbesondere die Natrium- und Kaliumsalze sowie die Redoxinitiatoren H₂O₂/Ascorbinsäure.

Die verwendeten Mengen an Initiator bzw. Initiatorgemischen bezogen auf eingesetztes Monomer liegen zwischen 0,01 und 10 Gew.-%, vorzugsweise zwischen 0,1 und 1,5 Gew.-%, besonders bevorzugt zwischen 0,15 und 0,8 Gew.-%.

Als Emulgatoren verwendet man beispielsweise ionische oder nichtionische Tenside.

Bevorzugte Emulgatoren sind anionische Emulgatoren wie Laurylsulfat, Natriumstearat, Kaliumoleat und vor allem C₁₅-Paraffinsulfonat. Als nichtionische Emulgatoren eignen sich vorzugsweise die Oxethylierungsprodukte des p-n-Octylphenols, p-n-Nonylphenols, p-n-Decylphenols mit einem Oxethylierungsgrad von 3 bis 200, bevorzugt 10 bis 120 sowie Oxethylierungsprodukte des Laurylalkohols, Oleylalkohols, Stearylalkohols, Ölsäure- und Stearinsäureamids, Oleylamids sowie der Stearin- und Ölsäure mit einem Oxethylierungsgrad von 3 bis 20. Ferner kommen auch kationische Emulgatoren wie Ammonium-, Phosphonium- und Sulfoniumverbindungen mit mindestens einer langen aliphatischen Kohlenwasserstoffkette als hydrophoben Molekülteil in Betracht.

Die für eine Emulsionspolymerisation wichtigen Emulgatoren werden in Mengen von 0,1 bis 10 Gew.-%, bevorzugt 0,1 bis 5,0 Gew.-%, bezogen auf eingesetztes Monomer eingesetzt.

Überraschenderweise wurde nun gefunden, daß eine pH-Wert Regelung während des Herstellprozesses von wäßrigen Polymerdispersionen durch Zugabe von mindestens zwei unterschiedlichen, basisch wirkenden Reagenzien, wobei mindestens eine der basisch wirkenden Reagenzien mehrstufig zugegeben wird, die Bildung koagulatfreier, monomerarmer und pH-Wert-stabiler Polymerdispersionen fördert.

Unter den o.g. Begriff "Herstellungsprozeß" ist im Sinne der Erfindung das Gesamtverfahren zur Herstellung wäßriger Polymerdispersionen gemeint - beginnend mit der Polymerisation, einer gegebenenfalls durchgeführten Nachpolymerisation und einer, der Polymerisation nachgeschalteten Stabilisierung der hergestellten Polymerdispersionen durch Einstellung des pH-Wertes zwischen 6 und 10.

Dabei ist es von Vorteil, wenn mindestens eine der basisch wirkenden Reagenzien "Puffereigenschaften" aufweist. Solche Puffereigenschaften findet man beispielsweise bei Salzen schwacher Säuren (siehe CD Römpp Chemie Lexikon-Version 1,0, Stuttgart/New York: Georg Thieme Verlag 1995).

Zusätzlich zu diesen Puffersubstanzen können zur pH-Wert Einstellung prinzipiell alle anorganischen oder organischen Basen verwendet werden, insbesondere solche Basen, die wasserlöslich sind.

In einer bevorzugten Ausführungsform ist von den eingesetzten, basisch wirkenden Reagenzien mindestens eines ein Salz einer Säure, ausgewählt aus der Gruppe, bestehend aus Kohlensäure, Borsäure, Essigsäure, Zitronensäure und Phosphorsäure, und ein weiteres basisch wirkendes Reagenz mindestens eine Base, ausgewählt aus der Gruppe, bestehend aus Alkali- und Erdalkalihydroxide, Ammoniak sowie primäre, sekundäre und tertiäre Amine.

Als Salze der oben genannten schwachen Säuren sind bevorzugt Alkali- und Erdalkalisalze zu nennen, besonders bevorzugt Natrium-, Kalium- oder Magnesiumsalze. Ganz besonders bevorzugte Puffersubstanzen sind Natriumacetat, Natriumcitrat, Natriumpyrophosphat, Kaliumpyrophosphat, Natriumhydrogencarbonat und/oder Natriumborat. Zusätzlich können auch noch Salze von ungesättigten schwachen Carbonsäuren wie z.B. Acrylsäure oder Methacrylsäure mitverwendet werden.

Beispiele für Alkali- und Erdalkalihydroxide sind u.a. Natriumhydroxid, Kaliumhydroxid, Magnesiumhydroxid, Calciumhydroxid.

Beispiele für primäre, sekundäre und tertiäre Amine sind u.a. Ethylamin, Diethylamin, Triethylamin, n-Propylamin, Di-n-propylamin, Tri-n-propylamin, Ethylendiamin, Triethanolamin, Anilin.

Die neben den oben genannten Puffersubstanzen bevorzugt verwendeten, basisch wirkenden Reagenzien sind Natriumhydroxid, Kaliumhydroxid, Calciumhydroxid und/oder Ammoniak, besonders bevorzugt ist Natriumhydroxid.

Von Vorteil ist es, wenn während des Herstellprozesses der wäßrigen Polymerdispersionen die Zugabe mindestens einer der basisch wirkenden Reagenzien, insbesondere die Zugabe einer oder mehrerer der o.g. Puffersubstanzen mindestens zweistufig erfolgt.

Bei der erfindungsgemäßen Verwendung der unterschiedlichen, basisch wirkenden Reagenzien zur Einstellung des pH-Wertes können diese Reagenzien gemeinsam oder auch jeweils einzeln zugegeben werden. Von Vorteil ist es, wenn die Zugabe der jeweils unterschiedlichen, basisch wirkenden Reagenzien zeitlich getrennt erfolgt.

Eine bevorzugte Ausführungsform des erfindungsgemäßen Verfahrens ist dadurch gekennzeichnet, daß man
a) mindestens einen Vertreter der bereits eingangs genannten radikalisch polymerisierbaren, ethylenisch ungesättigten Monomeren, bevorzugt C₁-C₆-Alkylester von Acrylsäure und Methacrylsäure, besonders bevorzugt Acrylsäuremethylester, Acrylsäureethylester, Methacrylsäuremethylester und Methacrylsäureethylester in Gegenwart eines sauer wirkenden Polymerisationsinitiators, bevorzugt Natrium oder Kaliumperoxodisulfat, bei einem pH-Wert im Bereich von 1 bis 7,5, bevorzugt im Bereich von 3 bis 7,5, besonders bevorzugt im Bereich von 4 bis 7,0 polymerisiert, wobei der pH-Wert durch Zugabe eines Salzes einer Säure, ausgewählt aus der Gruppe, bestehend aus Kohlensäure, Borsäure, Essigsäure, Zitronensäure und Phosphorsäure, bevorzugt durch Zugabe von Natriumacetat, Natriumcitrat, Natriumpyrophosphat, Kaliumpyrophosphat, Natriumhydrogencarbonat und/oder Natriumborat, konstant gehalten wird,
b) die Reaktionsmischung nach Verbrauch des Polymerisationsinitiators zur Reduzierung des Monomerengehaltes ohne pH-Wert-Regulierung bzw. ohne weitere Pufferzugabe nachpolymerisiert,
c) die nach erfolgter Polymerisation erhaltene wäßrige Dispersion durch erneute Zugabe eines Salzes einer Säure, ausgewählt aus der Gruppe, bestehend aus Kohlensäure, Borsäure, Essigsäure, Zitronensäure und Phosphorsäure, bevorzugt durch Zugabe von Natriumacetat, Natriumcitrat, Natriumpyrophosphat, Kaliumpyrophosphat, Natriumhydrogencarbonat und/oder Natriumborat abpuffert und
d) diese Dispersion anschließend durch Zugabe einer Base, ausgewählt aus der Gruppe, bestehend aus Alkali- und Erdalkalihydroxide sowie Ammoniak, bevorzugt Natrium- und/oder Kaliumhydroxid, auf einen pH-Wert zwischen 6 und 10, bevorzugt zwischen 7 und 9 einstellt
oder daß man im Anschluß an den Verfahrensschritt b) zunächst die Polymerdispersion durch Zugabe einer Base gemäß Verfahrensschritt d) auf einen pH-Wert zwischen 6 und 10, bevorzugt zwischen 7 und 9 einstellt und danach Verfahrensschritt c) vornimmt.

Die erfindungsgemäße Polymerisation, insbesondere der Prozeß gemäß Verfahrensschritt a) kann sowohl in einer batch als auch semi-batch Fahrweise durchgeführt werden. Bevorzugt arbeitet man mit dem semi-batch Verfahren, bei dem man beispielsweise ein Teil, in der Regel 10% der für die Polymerisation benötigten Menge an Polymerisationsinitiator, Emulgator, Puffersubstanz und Monomer vorlegt, das Gemisch auf Polymerisationstemperatur erhitzt und nach Anspringen der Polymerisation den Rest, d.h. jeweils Polymerisationsinitiator und Monomer gleichzeitig über getrennte Zuläufe zudosiert, wobei der pH-Wert während der Polymerisation durch Zugabe mindestens einer der o.g. Puffersubstanzen konstant gehalten wird.

Die Polymerisation erfolgt im Temperaturbereich von 40 bis 200°C, bevorzugt im Bereich von 50 bis 140°C, besonders bevorzugt im Bereich von 60 bis 100°C. Sie wird üblicherweise unter atmosphärischem Druck durchgeführt, kann jedoch auch unter vermindertem oder erhöhtem Druck, vorzugsweise zwischen 1 und 5 bar ablaufen.

Die Reaktionszeiten betragen je nach Ansatzgröße normalerweise 1 bis 10, meistens 1,5 bis 5 Stunden.

Zur Reduzierung des Monomergehaltes der wäßrigen Polymerdispersion nach der Polmerisation gemäß Verfahrensschritt a) ist es möglich, die wäßrige Dispersion kurzzeitig auf Temperaturen zwischen 90 und 100°C, gegebenenfalls unter reduziertem Druck zu erhitzen, um so die restlichen Monomeren auszugasen. Eine mögliche Schaumbildung läßt sich dabei durch Zugabe von Antischaummitteln vermeiden.

Als weitere und bevorzugte Methode zur Reduzierung des Monomergehaltes im Rahmen des erfindungsgemäßen Verfahrens ist die Nachpolymerisation zu nennen, bei der durch Zugabe weiterer Initiatoren, bevorzugt durch Zugabe von Redox-Initiatoren, besonders bevorzugt durch Zugabe einer Mischung aus H₂O₂, Ascorbinsäure und Eisen-II-sulfat, die Menge an Monomeren auf einen Gehalt < 100 ppm, bevorzugt < 20 ppm reduziert werden kann. Während der Nachpolymerisation kann der pH-Wert um bis zu 4 Einheiten fallen. Durch gegebenenfalls weitere Zugabe der o.g. Puffersubstanzen kann eine derartige Verschiebung des pH-Wertes vermieden werden. Es hat sich jedoch gezeigt, daß es von Vorteil ist, im Verlauf der Nachpolymerisation auf eine pH-Wert-Regelung zu verzichten.

Für die Herstellung lagerstabiler, wäßriger Polymerdispersionen ist es außerdem von Vorteil, nach vollständiger Umsetzung der polymerisierbaren Monomeren gemäß den Verfahrensschritten a) und b) das Systems auf einen pH-Wert im Bereich von 6 bis 10, bevorzugt im Bereich von 7 bis 9 einzustellen.

Insbesondere im Hinblick auf eine pH-Wert-stabile wäßrige Polymerdispersion ist es von Vorteil, den pH-Wert des Systems nach vollständiger Umsetzung der polymerisierbaren Monomeren, gemäß Verfahrensschritt b), zunächst durch erneute Zugabe mindestens eines Salzes einer Säure, ausgewählt aus der Gruppe, bestehend aus Kohlensäure, Borsäure, Essigsäure, Zitronensäure und Phosphorsäure, auf einen pH-Wert im Bereich von 5 bis 7 abzupuffern und anschließend durch Zugabe mindestens einer Base, ausgewählt aus der Gruppe, bestehend aus Alkali- und Erdalkalihydroxide, Ammoniak sowie primäre, sekundäre und tertiäre Amine, den gewünschten End-pH-Wert im Bereich von 6 bis 10, bevorzugt im Bereich von 7 bis 9 einzustellen.

Es ist aber auch möglich, nach der vollständigen Polymerisation zunächst mindestens eine der o.g. Basen und anschließend den Puffer zuzugeben oder auch beide gleichzeitig zuzugeben.

Die K-Werte der Polymerisate liegen im Bereich von 10 bis 250, bevorzugt 30 bis 200, besonders bevorzugt 50 bis 150, ganz besonders bevorzugt im Bereich von 70 bis 120. Der jeweils gewünschte K-Wert läßt sich in an sich bekannter Weise durch die Zusammensetzung der Einsatzstoffe einstellen. Die K-Werte werden bestimmt nach Fikentscher, Cellulosechemie, Bd. 13, S. 58 bis 64 und 71 bis 74 (1932) in N-Methylpyrrolidon bei 25°C und Polymerkonzentrationen, die je nach K-Wert-Bereich zwischen 0,1 Gew.-% und 5 Gew.-% liegen.

Der Feststoffgehalt der erhaltenen wäßrigen Polymerdispersionen bzw. Lösungen beträgt in der Regel 10 bis 70 Gew.-%, bevorzugt 15 bis 65 Gew.-%, besonders bevorzugt 20 bis 60 Gew.-%.

Gegenstand der Erfindung sind auch wäßrige Polymerdispersionen, erhältlich nach dem eingangs beschriebenen Polymerisationsverfahren. Bevorzugt sind solche Polymerdispersionen auf der Basis von radikalisch polymerisierbaren C₁-C₆-Alkylester von Acrylsäure und/oder Methacrylsäure, insbesondere Acrylsäuremethylester, Acrylsäureethylester, Methacrylsäuremethylester und/oder Methacrylsäureethylester. Die Dispersionen weisen einen Restmonomergehalt von kleiner 100 ppm, bevorzugt kleiner 20 ppm auf.

Die wäßrigen Polymerdispersionen können durch verschiedene Trocknungsverfahren wie z.B. Sprühtrocknung, Fluidized Spray Drying, Walzentrocknung oder Gefriertrocknung in Pulverform überführt werden. Durch die vorteilhafte geringe Viskosität der Polymerdispersionen wird als Trocknungsverfahren bevorzugt die Sprühtrocknung eingesetzt.

Sofern erforderlich können hierbei auch Sprühhilfsmittel wie z.B. hochdisperse Kieselsäure, Silikate, Stärke bzw. Stärkederivate, Cellulose bzw. Cellulosederivate, Polyvinylpyrrolidone oder Polyvinylalkohole zugesetzt werden.

Aus dem so erhaltenen Polymer-Trockenpulver läßt sich durch Redispergieren in Wasser erneut eine wäßrige Dispersion bzw. Lösung herstellen. Die Überführung in Pulverform hat den Vorteil einer einfacheren Transportmöglichkeit sowie einer geringeren Neigung für Keimbefall.

Gegenstand der Erfindung sind daher auch Polymerpulver, hergestellt durch Trocknung der nach dem erfindungsgemäßen Verfahren erzeugten wäßrigen Polymerdispersionen. Je nach Zusammensetzung der Polymere kann es sich dabei um wasserlösliche, wasserdispergierbare oder wasserunlösliche Polymerpulver handeln.

Die erfindungsgemäßen wasserlöslichen oder wasserdispergierbaren Polymerisate eignen sich hervorragend als magensaftlösliche oder als im Magensaft dispergierbare Filmbildner, Bindemittel, Benetzungshilfsstoff und/oder Löslichkeitsverbesserer für pharmazeutische Darreichungsformen.

Die erfindungsgemäßen wasserunlöslichen Polymerisate eignen sich hervorragend als Retardierungspolymere zur Verzögerung der Wirkstofffreisetzung, Stabilisierung von Arzneistoffen sowie zur Geschmacks- bzw. Geruchsmaskierung von unangenehm schmeckenden bzw. riechenden Wirkstoffen.

Ein bevorzugtes Einsatzgebiet der wasserdispergierbaren oder wasserunlöslichen Polymerisate ist die Verwendung als Überzugsmittel für feste pharmazeutische Darreichungsformen.

Aufgrund der enormen Flexibilität und der niedrigen Viskosität sind bei der Verwendung als Überzugsmittel in der Regel keine zusätzlichen Weichmacher erforderlich.

Gegenstand der Erfindung sind außerdem pharmazeutische Darreichungsformen, enthaltend mindestens ein wasserlösliches oder wasserdispergierbares oder wasserunlösliches Polymerisat als Überzugsmittel, Bindemittel und/oder filmbildender Hilfsstoff, wobei das Polymerisat, das sowohl als wäßrige Dispersion als auch als Polymerpulver eingesetzt werden kann, erhältlich ist durch das bereits eingangs beschriebene, erfindungsgemäße Verfahren.

Bei den überzogenen Darreichungsformen handelt es sich bevorzugt u.a. um Filmtabletten, Filmmikrotabletten, Dragees, überzogene Pastillen, Kapseln, Kristalle, Granulate oder Pellets.

Bei den bindemittelhaltigen Darreichungsformen handelt es sich bevorzugt u.a. um Tabletten, Mikrotabletten, Kerne, Granulate oder Pellets.

In den nachfolgenden Beispielen wird die Herstellung der erfindungsgemäßen wäßrigen Polymerdispersionen näher erläutert.

Herstellung der Polymerisate

### Beispiel 1

Eine Lösung aus

| | |
|---|---|
| 497,1 g | Wasser |
| 3,5 g | Natriumlaurylsulfat (15%ig) |
| 53,7 g | Zulauf 1 |

wurde nach dem Erwärmen auf 75°C mit 7,5 g Natriumperoxodisulfat (7%ig) versetzt und danach im Laufe von 2 Stunden bei 80°C und einem pH-Wert von 7 kontinuierlich mit den Zuläufen 1 und 2 versetzt.

### Zulauf 1:

| | |
|---|---|
| 500,7 g | Wasser |
| 22,6 g | Ethoxyliertes Nonylphenol (100 EO-Einheiten) |
| 17,5 g | Natriumpyrophosphat (3%ig) |
| 7,0 g | Natriumlaurylsufat (15%ig) |
| 369,0 g | Ethylacrylat |
| 158,1 g | Methylmethacrylat |

### Zulauf 2:

| | |
|---|---|
| 21,1 g | Natriumperoxodisulfat (2,5%ig) |

Danach wurde 1,5 Stunden nachpolymerisiert, auf Raumtemperatur abgekühlt und nacheinander mit einer Lösung von 0,2 g Wasserstoffperoxid (30%ig) in 8,9 g Wasser und einer Lösung von 0,3 g Ascorbinsäure und 0,5 g Eisen-II-sulfat (1%ig) in 23,7 g Wasser versetzt. Der pH-Wert der Dispersion betrug nach diesem Schritt 4.

Anschließend wurde der pH-Wert nacheinander durch Zugabe von 17,6 g Natriumpyrophosphat (3%ig) auf 6 eingestellt und durch weitere Zugabe einer 10%igen wäßrigen Lösung von NaOH auf einen Wert von 8,5 eingestellt.

### Vergleichsbeispiel 1

Eine Lösung aus

| | |
|---|---|
| 497,1 g | Wasser |
| 3,5 g | Natriumlaurylsulfat (15%ig) |
| 53,7 g | Zulauf 1 |

wurde nach dem Erwärmen auf 75°C mit 7, 5 g Natriumperoxodisulaft (7%ig) versetzt und danach im Laufe von 2 Stunden bei 80°C und einem pH-Wert von 8 mit den Zuläufen 1 und 2 versetzt.

### Zulauf 1

| | |
|---|---|
| 500,7 g | Wasser |
| 22,6 g | Ethoxyliertes Nonylphenol (100 EO-Einheiten) |
| 35,1 g | Natriumpyrophosphat (3%ig) |
| 7,0 g | Natriumlaurylsufat (15%ig) |
| 369,0 g | Ethylacrylat |
| 158,1 g | Methylmethacrylat |

### Zulauf 2

| | |
|---|---|
| 21,1 g | Natriumperoxodisulfat (2,5%ig) |

Danach wurde 1,5 Stunden nachpolymerisiert, auf Raumtemperatur abgekühlt und nacheinander mit einer Lösung von 0,2 g Wasserstoffperoxid (30%ig) in 8,9 g Wasser und einer Lösung von 0,3 g Ascorbinsäure und 0,5 g Eisen-II-sulfat (1%ig) in 23,7 g Wasser versetzt. Der pH-Wert der Dispersion betrug nach diesem Schritt 6.

Anschließend wurde der pH-Wert durch Zugabe einer 10%igen wäßrigen Lösung von NaOH auf einen Wert von 8,5 eingestellt.

### Vergleichsbeispiel 2

Eine Lösung aus

| | |
|---|---|
| 497,1 g | Wasser |
| 3,5 g | Natriumlaurylsulfat (15%ig) |
| 53,7 g | Zulauf 1 |

wurde nach dem Erwärmen auf 75°C mit 7,5 g Natriumperoxodisulaft (7%ig) versetzt und danach im Laufe von 2 Stunden bei 80°C und einem pH-Wert von 7 mit den Zuläufen 1 und 2 versetzt.

### Zulauf 1

| | |
|---|---|
| 500,7 g | Wasser |
| 22,6 g | Ethoxyliertes Nonylphenol (100 EO-Einheiten) |
| 17,5 g | Natriumpyrophosphat (3%ig) |
| 7,03 g | Natriumlaurylsufat (15%ig) |
| 369,0 g | Ethylacrylat |
| 158,1 g | Methylmethacrylat |

### Zulauf 2

| | |
|---|---|
| 21,1 g | Natriumperoxodisulfat (2,5%ig) |

Danach wurde 1,5 Stunden nachpolymerisiert, auf Raumtemperatur abgekühlt und nacheinander mit einer Lösung von 0,2 g Wasserstoffperoxid (30%ig) in 8,9 g Wasser und einer Lösung von 0,26 g Ascorbinsäure und 0,5 g Eisen-II-sulfat (1%ig) in 23,7 g Wasser versetzt. Der pH-Wert der Dispersion betrug nach diesem Schritt 4.

Anschließend wurde der pH-Wert durch Zugabe einer 10%igen wäßrigen Lösung von NaOH auf einen Wert von 8,5 eingestellt.

### Beispiel 2

Die nach Beispiel 1 sowie nach den Vergleichsbeispielen 1 und 2 hergestellten Polymerdispersionen wurden auf ihren Monomergehalt hin untersucht und einem Lagerstabilitätstest unterzogen. Die Ergebnisse sind in der folgenden Tabelle zusammengefaßt.

| Polymerdispersion | Koagulat [%] ¹⁾ | pH-Wert ²⁾ | pH-Wert ³⁾ | Restmonomergehalt [ppm] |
|---|---|---|---|---|
| | | | | |
| Beispiel 1 | 0,1 | 8,5 | 8,1 | Ethylacrylat: < 10 Methylmethacrylat: < 10 |
| Vergleichsbeispiel 1 | 0,15 | 8,5 | 8,0 | Ethylacrylat: 300 Methylmethacrylat: 20 |
| Vergleichsbeispiel 2 | 0,1 | 8,5 | 7,4 | Ethylacrylat: < 10 Methylmethacrylat: < 10 |

| | | | | |
|---|---|---|---|---|
| ¹⁾ gemessen nach Filtration der wäßrigen Dispersion über eine 120µm Sieb | | | | |
| ²⁾ gemessen unmittelbar nach der Herstellung der fertigen Dispersion; | | | | |
| ³⁾ gemessen nach 2 wöchiger Lagerung | | | | |

Wie aus der Tabelle zu ersehen ist, zeigt die nach dem erfindungsgemäßen Verfahren hergestellte Polymerdispersion (Beispiel 1) die beste Lagerstabilität (pH-Wert-Stabilität) bei gleichzeitig gewünschtem niedrigen Restmonomeranteil und niedriger Koagulatrate.

### Beispiel 3

### Retardcoating von Coffeinpellets

In einem Wirbelschichtcoater (Strea 1, Fa. Aeromatic) wurden 500 g Coffeinpellets mit einem Korndruchmesser von 0,7 bis 1,4 mm mit einer 30%igen Dispersion aus Ethylacrylat-Methylmethacrylat-Copolymer gemäß Beispiel 1 überzogen. Die Dispersion wurde dabei mittels des Wurster-Verfahrens auf die Pellets gesprüht. Die Coatingrezeptur wies folgende Zusammensetzung auf:

| | |
|---|---|
| Ethylacrylat-Methylmethacrylat-Copolymer-Dispersion (30%) | 41,66 % |
| Talkum | 12,5 % |
| Antischaummittel | |
| Pharsil 21046 VP | 0,025 % |
| Wasser | 45,815 % |

Die Zulufttemperatur wurde auf 45 °C eingestellt, die Ablufttemperatur lag bei 27 °C. Insgesamt wurden 477,2 g Sprühsuspension mit einer Sprührate von 15 g/min aufgetragen. Nach Beendigung des Aufsprühens wurde noch 3 min. bei 45 °C nachgetrocknet.

Die Pellets wiesen nach dem Coaten eine glatte Oberfläche auf. Die Freisetzung des Wirkstoffes wurde in einer Freisetzungsapparatur nach USP 23 (Fa. Pharmatest PTW) bestimmt, wobei in den ersten beiden Stunden in 0,08 n-HCl (künstlicher Magensaft) und anschließend in Phosphatpuffer pH 6,8 (künstlicher Darmsaft) freigesetzt wurde.

Folgende Freisetzungswerte wurden erhalten:

| | |
|---|---|
| 1 h | 1 % |
| 2 h | 2 % |
| 4 h | 11 % |
| 8 h | 55 % |
| 12 h | 70 % |
| 24 h | 95 % |

### Beispiel 4

### Transdermales therapeutisches System

10 g Propranolol-HCl und 30 g Polyethylenglykol 400 wurden in 100 g Wasser gelöst und langsam in 860 g einer 30 Gew.-%igen Dispersion von Ethylacrylat-Methylmethacrylat-Copolymer, hergestellt nach Beispiel 1, eingerührt. Nach der Zugabe wurde noch 1 h langsam weitergerührt. Diese Zubereitung wurde auf einem Filmziehgerät (Fa. Erichsen) mit einem 100 µm Rakel auf einer Polyesterfolie (Hostaphan®, Hoechst) ausgezogen und bei 55°C getrocknet. Das Rakeln und Trocknen wurde nochmals wiederholt, bis die Schichtdicke des trockenen Filmes 150 µm betrug.

## Patentansprüche

1. Verfahren zur Herstellung einer wäßrigen Polymerdispersion durch Polymerisation von mindestens einem radikalisch polymerisierbaren, ethylenisch ungesättigten Monomeren aus der Gruppe, bestehend aus C₁-C₂₄-Alkylester von monoethylenisch ungesättigten C₃-C₈-Carbonsäuren, C₁-C₂₄-Alkylester von monoethylenisch ungesättigten C₄-C₈-Dicarbonsäuren, Vinylester von aliphatischen C₁-C₂₄-Carbonsäuren, Amide von monoethylenisch ungesättigten C₃-C₈-Carbonsäuren, C₁-C₂₄-Alkyl-Vinylether, N-C₁-C₂₄-Alkyl-substituierter Amide von monoethylenisch ungesättigten C₃-C₈-Carbonsäuren, N,N-C₁-C₂₄-Dialkyl-substituierter Amide von monoethylenisch ungesättigten C₃-C₈-Carbonsäuren, N-Vinyllactame, Styrol und Butadien in einem wäßrigen System in Gegenwart eines Polymerisationsinitiators, **dadurch gekennzeichnet, daß** der pH-Wert der wäßrigen Dispersion während des Herstellprozesses durch Zugabe von mindestens zwei unterschiedlichen, basisch wirkenden Reagenzien eingestellt wird, wobei mindestens eine der basisch wirkenden Reagenzien mehrstufig zugegeben wird, mindestens eine der basisch wirkenden Reagenzien ein Salz einer schwachen Säure ist, und wobei nach vollständiger Umsetzung der polymerisierbaren Monomeren die Dispersion auf einen pH-Wert im Bereich von 6 bis 10 eingestellt wird.

2. Verfahren nach Anspruch 1, **dadurch gekennzeichnet, daß** die Zugabe der unterschiedlichen, basisch wirkenden Reagenzien zeitlich getrennt erfolgt.

3. Verfahren nach einem der Ansprüche 1 oder 2, **dadurch gekennzeichnet, daß** die Polymerisation in Gegenwart eines sauer wirkenden Polymerisationsinitiators erfolgt.

4. Verfahren nach einem der Ansprüche 1 bis 3, **dadurch gekennzeichnet, daß** von den eingesetzten basisch wirkenden Reagenzien mindestens eines ein Salz einer Säure, ausgewählt aus der Gruppe, bestehend aus Kohlensäure, Borsäure, Essigsäure, Zitronensäure und Phosphorsäure, ist und ein weiteres basisch wirkendes Reagenz mindestens eine Base, ausgewählt aus der Gruppe, bestehend aus Alkali- und Erdalkalihydroxide, Ammoniak sowie primäre, sekundäre und tertiäre Amine, darstellt.

5. Verfahren nach einem der Ansprüche 1 bis 4, **dadurch gekennzeichnet, daß** es sich bei den radikalisch polymerisierbaren, ethylenisch ungesättigten Monomeren um C₁-C₆-Alkylester von Acrylsäure und/oder Methacrylsäure handelt

6. Verfahren nach einem der Ansprüche 1 bis 5, **dadurch gekennzeichnet, daß** die Zugabe mindestens einer der basisch wirkenden Reagenzien mindestens zweistufig erfolgt.

7. Verfahren nach einem der Ansprüche 1 bis 6, **dadurch gekennzeichnet, daß** die Zugabe eines Salzes einer Säure, ausgewählt aus der Gruppe, bestehend aus Kohlensäure, Borsäure, Essigsäure, Zitronensäure und Phosphorsäure mindestens zweistufig erfolgt.

8. Verfahren nach einem der Ansprüche 1 bis 7, **dadurch gekennzeichnet, daß** man
a) mindestens ein radikalisch polymerisierbares, ethylenisch ungesättigtes Monomer in Gegenwart eines sauer wirkenden Polymerisationsinitiators bei einem pH-Wert im Bereich von 1 bis 7,5 polymerisiert, wobei der pH-Wert durch Zugabe eines Salzes einer Säure, ausgewählt aus der Gruppe, bestehend aus Kohlensäure, Borsäure, Essigsäure, Zitronensäure und Phosphorsäure, konstant gehalten wird,
b) die Reaktionsmischung nach Verbrauch des Polymerisationsinitiators zur Reduzierung des Monomerengehaltes ohne pH-Wert-Regulierung nachpolymerisiert,
c) die nach erfolgter Polymerisation erhaltene wäßrige Dispersion durch erneute Zugabe eines Salzes einer Säure, ausgewählt aus der Gruppe, bestehend aus Kohlensäure, Borsäure, Essigsäure, Zitronensäure und Phosphorsäure, abpuffert und
d) diese Dispersion anschließend durch Zugabe einer Base, ausgewählt aus der Gruppe, bestehend aus Alkali- und Erdalkalihydroxide, Ammoniak, auf einen pH-Wert zwischen 6 und 10 einstellt
oder daß man im Anschluß an den Verfahrensschritt b) zunächst die Polymerdispersion durch Zugabe einer Base gemäß Verfahrensschritt d) auf einen pH-Wert zwischen 6 und 10 einstellt und danach Verfahrensschritt c) vornimmt.

9. Verfahren nach Anspruch 8, **dadurch gekennzeichnet, daß** man im Verfahrensschritt a) das ethylenisch ungesättigte Monomer und den Polymerisationsinitiator in einer semi-batch Fahrweise über getrennte Zuläufe gleichzeitig in den Polymerisationsreaktor dosiert.

10. Verfahren nach Anspruch 8, **dadurch gekennzeichnet, daß** man für die Nachpolymerisation im Verfahrensschritt b) als Initiator ein Redox-System verwendet.

11. Verfahren nach Anspruch 8, **dadurch gekennzeichnet, daß** man für die Nachpolymerisation im Verfahrensschritt b) als Initiator ein Redox-System bestehend aus H₂O₂, Ascorbinsäure und/oder Eisen-II-sulfat verwendet.

12. Verfahren nach Anspruch 8, **dadurch gekennzeichnet, daß** man die Verfahrensschritte c) und d) gleichzeitig durchführt.

13. Verwendung von Polymerdispersionen, definiert gemäß Anspruch 1 als Hilfsstoff für pharmazeutische Darreichungsformen.

14. Verwendung nach Anspruch 13 als Überzugsmittel für feste pharmazeutische Darreichungsformen.

15. Feste pharmazeutische Darreichungsformen, enthaltend Polymere, hergestellt nach einem Verfahren, definiert gemäß Anspruch 1.

## Claims

1. A process for preparing an aqueous polymer dispersion by polymerizing at least one free-radically polymerizable ethylenically unsaturated monomer from the group consisting of C₁-C₂₄ alkyl esters of monoethylenically unsaturated C₃-C₈ carboxylic acids, C₁-C₂₄ alkyl esters of monoethylenically unsaturated C₄-C₈ dicarboxylic acids, vinyl esters of aliphatic C₁-C₂₄ carboxylic acids, amides of monoethylenically unsaturated C₃-C₈ carboxylic acids, C₁-C₂₄ alkyl vinyl ethers, N-C₁-C₂₄ alkyl-substituted amides of monoethylenically unsaturated C₃-C₈ carboxylic acids, N,N-C₁-C₂₄ dialkyl-substituted amides of monoethylenically unsaturated C₃-C₈ carboxylic acids, N-vinyllactams, styrene, and butadiene in an aqueous system in the presence of a polymerization initiator, which comprises adjusting the pH of the aqueous dispersion during the preparation process by adding at least two different, basic reagents, at least one of the basic reagents being added in a plurality of stages, at least one of the basic reagents being a salt of a weak acid, and, following complete conversion of the polymerizable monomers, the dispersion being adjusted to a pH in the range from 6 to 10.

2. A process as claimed in claim 1, wherein the addition of the different, basic reagents is made at different times.

3. A process as claimed in either of claims 1 and 2, wherein the polymerization takes place in the presence of an acidic polymerization initiator.

4. A process as claimed in any of claims 1 to 3, wherein at least one of the basic reagents employed is a salt of an acid selected from the group consisting of carbonic acid, boric acid, acetic acid, citric acid and phosphoric acid and a further basic reagent comprises at least one base selected from the group consisting of alkali metal hydroxides and alkaline earth metal hydroxides, ammonia, and primary, secondary and tertiary amines.

5. A process as claimed in any of claims 1 to 4, wherein the free-radically polymerizable ethylenically unsaturated monomers comprise C₁-C₆ alkyl esters of acrylic acid and/or methacrylic acid.

6. A process as claimed in any of claims 1 to 5, wherein the addition of at least one of the basic reagents takes place in at least two stages.

7. A process as claimed in any of claims 1 to 6, wherein the addition of a salt of an acid selected from the group consisting of carbonic acid, boric acid, acetic acid, citric acid and phosphoric acid takes place in at least two stages.

8. A process as claimed in any of claims 1 to 7, wherein
a) at least one free-radically polymerizable, ethylenically unsaturated monomer is polymerized in the presence of an acidic polymerization initiator at a pH in the range from 1 to 7.5, the pH being kept constant by adding a salt of an acid selected from the group consisting of carbonic acid, boric acid, acetic acid, citric acid and phosphoric acid,
b) following consumption of the polymerization initiator, the reaction mixture is postpolymerized without pH regulation in order to reduce the monomer content,
c) the aqueous dispersion obtained following polymerization is buffered by further addition of a salt of an acid selected from the group consisting of carbonic acid, boric acid, acetic acid, citric acid and phosphoric acid, and
d) subsequently this dispersion is adjusted to a pH from 6 to 10 by adding a base selected from the group consisting of alkali metal hydroxides and alkaline earth metal hydroxides and also ammonia, or wherein, following step b), of the process, the polymer dispersion is first adjusted to a pH of from 6 to 10 in accordance with step d), and then step c) is performed.

9. A process as claimed in claim 8, wherein the ethylenically unsaturated monomer and the polymerization initiator in step a) are, in a semi-batch procedure, metered into the polymerization reactor simultaneously by way of separate feedstreams.

10. A process as claimed in claim 8, wherein a redox system is used as initiator for the postpolymerization in step b).

11. A process as claimed in claim 8, wherein a redox system consisting of H₂O₂, ascorbic acid and/or iron(II) sulfate is used as initiator for the postpolymerization in step b).

12. A process as claimed in claim 8, wherein steps c) and d) are conducted simultaneously.

13. The use of a polymer dispersion as defined in claim 1 as an auxiliary for a pharmaceutical administration form.

14. The use as claimed in claim 13 as a coating composition for a solid pharmaceutical administration form.

15. A solid pharmaceutical administration form comprising a polymer prepared by a process as defined in claim 1.

## Revendications

1. Procédé pour la préparation d'une dispersion de polymère hydrosoluble par polymérisation d'au moins un monomère à insaturation éthylénique, polymérisable par voie radicalaire, choisi dans le groupe consistant en les esters d'alkyle en C₁-C₂₄ d'acides carboxyliques en C₃-C₈ à monoinsaturation éthylénique, les esters d'alkyle en C₁-C₂₄ d'acides dicarboxyliques en C₄-C₈ à monoinsaturation éthylénique, les esters vinyliques d'acides carboxyliques en C₁-C₂₄ aliphatiques, les amides d'acides carboxyliques en C₃-C₈ à monoinsaturation éthylénique, les éthers d'alkyle en C₁-C₂₄ et de vinyle, les amides N-alkyl(C₁-C₂₄)-substitués d'acides carboxyliques en C₃-C₈ à monoinsaturation éthylénique, les amides N,N-dialkyl(C₁-C₂₄)-substitués d'acides carboxyliques en C₃-C₈ à monoinsaturation éthylénique, le styrène et le butadiène dans un système aqueux en présence d'un initiateur de polymérisation, **caractérisé par le fait que** la valeur du pH de la dispersion aqueuse est ajustée pendant l'opération de préparation par addition d'au moins deux réactifs différents à action basique, tandis qu'au moins l'un des réactifs à action basique est ajouté en plusieurs étapes, au moins l'un des réactifs à action basique est un sel d'un acide faible, et tandis que, une fois que la réaction des monomères polymérisables est achevée, la dispersion est ajustée à une valeur de pH dans l'intervalle de 6 à 10.

2. Procédé selon la revendication 1, **caractérisé par le fait que** l'addition des réactifs différents à action basique s'effectue de manière séparée dans le temps.

3. Procédé selon l'une des revendications 1 ou 2, **caractérisé par le fait que** la polymérisation s'effectue en présence d'un initiateur de polymérisation à action acide.

4. Procédé selon l'une des revendications 1 à 3, **caractérisé par le fait que**, parmi les réactifs à action basique mis en oeuvre, au moins l'un est un sel d'un acide choisi dans le groupe consistant en l'acide carbonique, l'acide borique, l'acide acétique, l'acide citrique et l'acide phosphorique, et un autre réactif à action basique représente au moins une base, choisie dans le groupe consistant en les hydroxydes alcalins et alcalino-terreux, l'ammoniac, ainsi que les amines primaires, secondaires et tertiaires.

5. Procédé selon l'une des revendications 1 à 4, **caractérisé par le fait qu'**il s'agit, en ce qui concerne les monomères à insaturation éthylénique, polymérisables par voie radicalaire, d'ester d'alkyle en C₁-C₆ d'acide acrylique et/ou d'acide méthacrylique.

6. Procédé selon l'une des revendications 1 à 5, **caractérisé par le fait que** l'addition d'au moins un réactif à action basique est effectuée en au moins deux étapes.

7. Procédé selon l'une des revendications 1 à 6, **caractérisé par le fait que** l'addition d'un sel d'un acide choisi dans le groupe consistant en l'acide carbonique, l'acide borique, l'acide acétique, l'acide citrique et l'acide phosphorique est effectuée en au moins deux étapes.

8. Procédé selon l'une des revendications 1 à 7, **caractérisé par le fait que**
a) on polymérise au moins un monomère à insaturation éthylénique, polymérisable par voie radicalaire, en présence d'un initiateur de polymérisation à action acide à une valeur du pH dans l'intervalle de 1 à 7,5, tandis que la valeur du pH est maintenue constante par addition d'un sel d'un acide choisi dans le groupe consistant en l'acide carbonique, l'acide borique, l'acide acétique, l'acide citrique et l'acide phosphorique,
b) on poursuit la polymérisation du mélange réactionnel après consommation de l'initiateur de polymérisation par réduction de la teneur en monomères sans régulation de la valeur du pH,
c) on tamponne la dispersion aqueuse obtenue une fois que la polymérisation est effectuée, par une nouvelle addition d'un sel d'un acide choisi dans le groupe consistant en l'acide carbonique, l'acide borique, l'acide acétique, l'acide citrique et l'acide phosphorique, et
d) on maintient ensuite cette dispersion à une valeur de pH entre 6 et 10 par addition d'une base choisie dans le groupe consistant en les hydroxydes alcalins et alcalino-terreux et l'ammoniac,
ou **par le fait que**, à la suite de l'étape opératoire b), on ajuste d'abord la dispersion de polymère à une valeur de pH entre 6 et 10 par addition d'une base selon l'étape opératoire d) et on effectue ensuite l'étape opératoire c).

9. Procédé selon la revendication 8, **caractérisé par le fait que**, dans l'étape opératoire a), on dose le monomère à insaturation éthylénique et l'initiateur de polymérisation dans un mode opératoire semi-discontinu par des additions séparées simultanément dans le réacteur de polymérisation.

10. Procédé selon la revendication 8, **caractérisé par le fait qu'**on utilise un système redox comme initiateur pour la poursuite de la polymérisation dans l'étape opératoire b).

11. Procédé selon la revendication 8, **caractérisé par le fait qu'**on utilise comme initiateur pour la poursuite de la polymérisation dans l'étape opératoire b) un système redox consistant en H₂O₂, l'acide ascorbique et/ ou le sulfate de fer-II.

12. Procédé selon la revendication 8, **caractérisé par le fait qu'**on conduit les étapes opératoires c) et d) simultanément.

13. Utilisation de dispersions de polymère définies selon la revendication 1 comme adjuvant pour des formes d'administration pharmaceutiques.

14. Utilisation selon la revendication 13 comme agent de revêtement pour des formes d'administration pharmaceutiques solides.

15. Formes d'administration pharmaceutiques solides, consistant en des polymères préparés conformément à un procédé défini selon la revendication 1.
